# EUROPEAN PATENT APPLICATION

(11) **EP 3 748 127 A1**
(43) Date of publication of application: **09.12.2020**
(21) Application number: 20173412.6
(22) Date of filing: 07.05.2020
(51) Int. Cl.: F01D 5/22, F01D 25/12, F01D 11/00

(54) **TURBOMACHINE BLADE COOLING**

(30) Priority: 07.06.2019 GB 201908132
(71) Applicant: Rolls-Royce plc, London N1 9FX (GB)
(72) Inventor: Sturtzer, Luc, Derby, Derbyshire DE24 8BJ (GB); Leao, Fabio, Derby, Derbyshire DE24 8BJ (GB); Norris, Fraser, Derby, Derbyshire DE24 8BJ (GB)
(74) Representative: Rolls-Royce plc

(57) **Abstract**

There is disclosed a turbomachine blade comprising a root, an aerofoil, and a shroud 70, wherein: the shroud extends circumferentially between an axially extending first abutment surface 56 and an opposing axially extending second abutment surface 58, the first abutment surface 56 being configured to abut a second abutment surface 58 of an adjacent blade; the shroud 70 comprises a radially-outer platform surface 60 circumferentially extending between the first 56 and second 58 abutment surfaces; the shroud 70 comprises a plurality of channels 72 recessed in the first abutment surface 56, each channel 72 extending radially from a respective opening at the platform surface 60 to a respective opposing radially-inner end; and the shroud comprises a plurality of cooling passageways, each cooling passageway opening 52' into a respective one of the plurality of channels 72 so that in use a cooling flow from each cooling passageway flows along the respective channel 72 to the respective opening in the platform surface 60. There is also disclosed a method of manufacturing a turbomachine blade.

## Description

The present disclosure relates to a turbomachine blade, a method of manufacturing a turbomachine blade and a method of manufacturing a plurality of turbomachine blades.

A turbine for a turbomachine such as a gas turbine engine comprises a row of turbine blades arranged around a common axis. Turbine blades may comprise a shroud portion at their tip. The shroud portion may extend circumferentially between a first abutment surface (or "chock" surface) and an opposing abutment surface. When the blades are assembled in the turbine, the shroud portions of adjacent blades combine to form an annular shroud. The annular shroud serves to contain hot working gases within the blade row to optimise the power output of the turbine. The shroud also provides a protective barrier to protect components outside the blade row from the high temperatures of the hot working gases. It is important to provide adequate cooling to the turbine blade to avoid excessive wear of the blade material.

Known cooling arrangements comprise a network of internal cooling passageways within the turbine blade, with cooling air flowing through the network before exiting through rows of cooling passageway openings. It is desirable to have cooling passageway openings on the wedge surface, close to the radially inner surface of the shroud, in order to deliver cooling flow that prevents hotspots on the shroud portion.

Previously considered arrangements have encountered difficulties in providing sufficient cooling to the shroud.

There is a need to develop an improved cooling arrangement to alleviate at least some of the aforementioned problems.

An aspect of the present disclosure relates to a turbomachine blade comprising a root, an aerofoil, and a shroud, wherein: the shroud extends circumferentially between an axially extending first abutment surface and an opposing axially extending second abutment surface, the first abutment surface being configured to abut a second abutment surface of an adjacent blade; the shroud comprises a radially-outer platform surface circumferentially extending between the first and second abutment surfaces; the shroud comprises a plurality of channels recessed in the first abutment surface, each channel extending radially from a respective opening at the platform surface to a respective opposing radially-inner end; and the shroud comprises a plurality of cooling passageways, each cooling passageway opening into a respective one of the plurality of channels so that in use a cooling flow from each cooling passageway flows along the respective channel to the respective opening in the platform surface.

Each cooling passageway opening may be circumferentially offset from the first abutment surface by at least a radius of the cooling passageway. Each cooling passageway may be configured to deliver cooling flow adjacent to the first abutment surface.

A cross-sectional area of the opening of the passageway into the respective channel may be no more than a cross-sectional area of the respective opening of the channel at the platform surface.

Two or more of the cooling passageways may open into the same channel. It may be that there is a single cooling passageway associated with an opening into each of the plurality of channels.

Each channel may be open on the first abutment surface. The second abutment surface may have a radial extent such that, when the turbomachine blade abuts a like adjacent turbomachine blade, the second abutment surface of the adjacent blade at least partially closes each channel. The term "like" turbomachine blade is intended to refer to a turbomachine blade having the same features.

Another aspect of the present disclosure relates to a turbomachine blade comprising a root, an aerofoil, and a shroud, wherein: the shroud extends circumferentially between an axially extending first abutment surface and an opposing axially extending second abutment surface, the first abutment surface being configured to abut a second abutment surface of an adjacent blade (i.e. a like turbomachine blade); the shroud comprises a radially-outer platform surface circumferentially extending between the first and second abutment surfaces; the platform surface comprises a chamfer adjacent to the first abutment surface; and the shroud comprises a cooling passageway terminating at the chamfer.

The second abutment surface may extend radially beyond the first abutment surface such that the turbomachine blade is configured to define a trough between the chamfer and the second abutment surface of the adjacent blade. The term "trough" is intended to refer to the circumferential profile described by two adjacent turbomachine blades, with the lowest point of the trough corresponding to a radially-innermost point of the chamfer where it intersects the first abutment surface and abuts the second abutment surface.

There may be a chamfer edge defined between the chamfer and the first abutment surface. The chamfer may be arranged at angle of 30 to 80 degrees with respect to the first abutment surface, in a plane normal to the chamfer edge.

There may be a plurality of cooling passageways terminating at the chamfer.

Another aspect of the present disclosure relates to a method of manufacturing a turbomachine blade, comprising: providing a precursor blade comprising a root, an aerofoil and a shroud, the shroud extending circumferentially between first and second side surfaces; removing material by electrical discharge machining (EDM) from a radially-outer portion of the first side surface to form a radially-outer offset surface which is circumferentially offset from a remaining portion of the first side surface; creating, by EDM, at least one cooling passageway in the shroud, which terminates at an opening in the offset surface.

The remaining portion may define a first abutment surface, the second side surface may define a second abutment surface, and the first abutment surface may be configured to abut a second abutment surface of an adjacent blade.

The shroud may comprise a radially-outer platform surface circumferentially extending between the first side surface and second side surface, the platform surface including the offset surface.

The material may be removed to form a chamfer in the radially-outer platform surface, the chamfer defining the radially-outer offset surface and being adjacent to the remaining portion of the first side surface.

The material may be removed to create a plurality of recessed channels in the radially-outer portion of the first side surface, each channel extending radially from a respective opening at the platform surface to a respective opposing radially-inner end, wherein the radially-outer offset surface is a surface of the channel.

Removing material by EDM and creating the at least one cooling passageway may be performed using the same EDM electrode.

A cross sectional area of the opening of the passageway into each channel may be no more than a cross sectional area of the respective opening of the channel.

Another aspect of the present disclosure relates to a method of manufacturing a plurality of turbomachine blades, each blade manufactured by the aforementioned method, wherein the blades are configured so that in each pair of adjacent blades, the remaining portion of the first side surface of one blade of the pair abuts the second side surface of the second blade of the pair.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

The gearbox may be a reduction gearbox (in that the output to the fan is a lower rotational rate than the input from the core shaft). Any type of gearbox may be used. For example, the gearbox may be a "planetary" or "star" gearbox, as described in more detail elsewhere herein. The gearbox may have any desired reduction ratio (defined as the rotational speed of the input shaft divided by the rotational speed of the output shaft), for example greater than 2.5, for example in the range of from 3 to 4.2, or 3.2 to 3.8, for example on the order of or at least 3, 3.1, 3.2, 3.3, 3.4, 3.5, 3.6, 3.7, 3.8, 3.9, 4, 4.1 or 4.2. The gear ratio may be, for example, between any two of the values in the previous sentence. Purely by way of example, the gearbox may be a "star" gearbox having a ratio in the range of from 3.1 or 3.2 to 3.8. In some arrangements, the gear ratio may be outside these ranges.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

Each fan blade may be defined as having a radial span extending from a root (or hub) at a radially inner gas-washed location, or 0% span position, to a tip at a 100% span position. The ratio of the radius of the fan blade at the hub to the radius of the fan blade at the tip may be less than (or on the order of) any of: 0.4, 0.39, 0.38 0.37, 0.36, 0.35, 0.34, 0.33, 0.32, 0.31, 0.3, 0.29, 0.28, 0.27, 0.26, or 0.25. The ratio of the radius of the fan blade at the hub to the radius of the fan blade at the tip may be in an inclusive range bounded by any two of the values in the previous sentence (i.e. the values may form upper or lower bounds), for example in the range of from 0.28 to 0.32. These ratios may commonly be referred to as the hub-to-tip ratio. The radius at the hub and the radius at the tip may both be measured at the leading edge (or axially forwardmost) part of the blade. The hub-to-tip ratio refers, of course, to the gas-washed portion of the fan blade, i.e. the portion radially outside any platform.

The radius of the fan may be measured between the engine centreline and the tip of a fan blade at its leading edge. The fan diameter (which may simply be twice the radius of the fan) may be greater than (or on the order of) any of: 220 cm, 230 cm, 240 cm, 250 cm (around 100 inches), 260 cm, 270 cm (around 105 inches), 280 cm (around 110 inches), 290 cm (around 115 inches), 300 cm (around 120 inches), 310 cm, 320 cm (around 125 inches), 330 cm (around 130 inches), 340 cm (around 135 inches), 350cm, 360cm (around 140 inches), 370 cm (around 145 inches), 380 (around 150 inches) cm, 390 cm (around 155 inches), 400 cm, 410 cm (around 160 inches) or 420 cm (around 165 inches). The fan diameter may be in an inclusive range bounded by any two of the values in the previous sentence (i.e. the values may form upper or lower bounds), for example in the range of from 240 cm to 280 cm or 330 cm to 380 cm.

The rotational speed of the fan may vary in use. Generally, the rotational speed is lower for fans with a higher diameter. Purely by way of non-limitative example, the rotational speed of the fan at cruise conditions may be less than 2500 rpm, for example less than 2300 rpm. Purely by way of further non-limitative example, the rotational speed of the fan at cruise conditions for an engine having a fan diameter in the range of from 220 cm to 300 cm (for example 240 cm to 280 cm or 250 cm to 270cm) may be in the range of from 1700 rpm to 2500 rpm, for example in the range of from 1800 rpm to 2300 rpm, for example in the range of from 1900 rpm to 2100 rpm. Purely by way of further non-limitative example, the rotational speed of the fan at cruise conditions for an engine having a fan diameter in the range of from 330 cm to 380 cm may be in the range of from 1200 rpm to 2000 rpm, for example in the range of from 1300 rpm to 1800 rpm, for example in the range of from 1400 rpm to 1800 rpm.

In use of the gas turbine engine, the fan (with associated fan blades) rotates about a rotational axis. This rotation results in the tip of the fan blade moving with a velocity Uₜᵢₚ. The work done by the fan blades 13 on the flow results in an enthalpy rise dH of the flow. A fan tip loading may be defined as dH/Uₜᵢₚ², where dH is the enthalpy rise (for example the 1-D average enthalpy rise) across the fan and Uₜᵢₚ is the (translational) velocity of the fan tip, for example at the leading edge of the tip (which may be defined as fan tip radius at leading edge multiplied by angular speed). The fan tip loading at cruise conditions may be greater than (or on the order of) any of: 0.28, 0.29, 0.30, 0.31, 0.32, 0.33, 0.34, 0.35, 0.36, 0.37, 0.38, 0.39 or 0.4 (all units in this paragraph being Jkg⁻¹K⁻¹/(ms⁻¹)²). The fan tip loading may be in an inclusive range bounded by any two of the values in the previous sentence (i.e. the values may form upper or lower bounds), for example in the range of from 0.28 to 0.31, or 0.29 to 0.3.

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. In some arrangements the bypass ratio may be greater than (or on the order of) any of the following: 10, 10.5, 11, 11.5, 12, 12.5, 13, 13.5, 14, 14.5, 15, 15.5, 16, 16.5, 17, 17.5, 18, 18.5, 19, 19.5 or 20. The bypass ratio may be in an inclusive range bounded by any two of the values in the previous sentence (i.e. the values may form upper or lower bounds), for example in the range of form 12 to 16, 13 to 15, or 13 to 14. The bypass duct may be substantially annular. The bypass duct may be radially outside the core engine. The radially outer surface of the bypass duct may be defined by a nacelle and/or a fan case.

The overall pressure ratio of a gas turbine engine as described and/or claimed herein may be defined as the ratio of the stagnation pressure upstream of the fan to the stagnation pressure at the exit of the highest pressure compressor (before entry into the combustor). By way of non-limitative example, the overall pressure ratio of a gas turbine engine as described and/or claimed herein at cruise may be greater than (or on the order of) any of the following: 35, 40, 45, 50, 55, 60, 65, 70, 75. The overall pressure ratio may be in an inclusive range bounded by any two of the values in the previous sentence (i.e. the values may form upper or lower bounds), for example in the range of from 50 to 70.

Specific thrust of an engine may be defined as the net thrust of the engine divided by the total mass flow through the engine. At cruise conditions, the specific thrust of an engine described and/or claimed herein may be less than (or on the order of) any of the following: 110 Nkg⁻¹s, 105 Nkg⁻¹s, 100 Nkg⁻¹s, 95 Nkg⁻¹s, 90 Nkg⁻¹s, 85 Nkg⁻¹s or 80 Nkg⁻¹s. The specific thrust may be in an inclusive range bounded by any two of the values in the previous sentence (i.e. the values may form upper or lower bounds), for example in the range of from 80 Nkg⁻¹s to 100 Nkg⁻¹s, or 85 Nkg⁻¹s to 95 Nkg⁻¹s. Such engines may be particularly efficient in comparison with conventional gas turbine engines.

A gas turbine engine as described and/or claimed herein may have any desired maximum thrust. Purely by way of non-limitative example, a gas turbine as described and/or claimed herein may be capable of producing a maximum thrust of at least (or on the order of) any of the following: 160kN, 170kN, 180kN, 190kN, 200kN, 250kN, 300kN, 350kN, 400kN, 450kN, 500kN, or 550kN. The maximum thrust may be in an inclusive range bounded by any two of the values in the previous sentence (i.e. the values may form upper or lower bounds). Purely by way of example, a gas turbine as described and/or claimed herein may be capable of producing a maximum thrust in the range of from 330kN to 420 kN, for example 350kN to 400kN. The thrust referred to above may be the maximum net thrust at standard atmospheric conditions at sea level plus 15 degrees C (ambient pressure 101.3kPa, temperature 30 degrees C), with the engine static.

In use, the temperature of the flow at the entry to the high pressure turbine may be particularly high. This temperature, which may be referred to as TET, may be measured at the exit to the combustor, for example immediately upstream of the first turbine vane, which itself may be referred to as a nozzle guide vane. At cruise, the TET may be at least (or on the order of) any of the following: 1400K, 1450K, 1500K, 1550K, 1600K or 1650K. The TET at cruise may be in an inclusive range bounded by any two of the values in the previous sentence (i.e. the values may form upper or lower bounds). The maximum TET in use of the engine may be, for example, at least (or on the order of) any of the following: 1700K, 1750K, 1800K, 1850K, 1900K, 1950K or 2000K. The maximum TET may be in an inclusive range bounded by any two of the values in the previous sentence (i.e. the values may form upper or lower bounds), for example in the range of from 1800K to 1950K. The maximum TET may occur, for example, at a high thrust condition, for example at a maximum take-off (MTO) condition.

A fan blade and/or aerofoil portion of a fan blade described and/or claimed herein may be manufactured from any suitable material or combination of materials. For example at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium based metal or an aluminium based material (such as an aluminium-lithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described and/or claimed herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc. By way of further example, the fan blades maybe formed integrally with a central portion. Such an arrangement may be referred to as a bladed disc or a bladed ring. Any suitable method may be used to manufacture such a bladed disc or bladed ring. For example, at least a part of the fan blades may be machined from a block and/or at least part of the fan blades may be attached to the hub/disc by welding, such as linear friction welding.

The gas turbine engines described and/or claimed herein may or may not be provided with a variable area nozzle (VAN). Such a variable area nozzle may allow the exit area of the bypass duct to be varied in use. The general principles of the present disclosure may apply to engines with or without a VAN.

The fan of a gas turbine as described and/or claimed herein may have any desired number of fan blades, for example 14, 16, 18, 20, 22, 24 or 26 fan blades.

As used herein, cruise conditions may mean cruise conditions of an aircraft to which the gas turbine engine is attached. Such cruise conditions may be conventionally defined as the conditions at mid-cruise, for example the conditions experienced by the aircraft and/or engine at the midpoint (in terms of time and/or distance) between top of climb and start of decent.

Purely by way of example, the forward speed at the cruise condition may be any point in the range of from Mach 0.7 to 0.9, for example 0.75 to 0.85, for example 0.76 to 0.84, for example 0.77 to 0.83, for example 0.78 to 0.82, for example 0.79 to 0.81, for example on the order of Mach 0.8, on the order of Mach 0.85 or in the range of from 0.8 to 0.85. Any single speed within these ranges may be the cruise condition. For some aircraft, the cruise conditions may be outside these ranges, for example below Mach 0.7 or above Mach 0.9.

Purely by way of example, the cruise conditions may correspond to standard atmospheric conditions at an altitude that is in the range of from 10000m to 15000m, for example in the range of from 10000m to 12000m, for example in the range of from 10400m to 11600m (around 38000 ft), for example in the range of from 10500m to 11500m, for example in the range of from 10600m to 11400m, for example in the range of from 10700m (around 35000 ft) to 11300m, for example in the range of from 10800m to 11200m, for example in the range of from 10900m to 11100m, for example on the order of 11000m. The cruise conditions may correspond to standard atmospheric conditions at any given altitude in these ranges.

Purely by way of example, the cruise conditions may correspond to: a forward Mach number of 0.8; a pressure of 23000 Pa; and a temperature of -55 degrees C. Purely by way of further example, the cruise conditions may correspond to: a forward Mach number of 0.85; a pressure of 24000 Pa; and a temperature of -54 degrees C (which may be standard atmospheric conditions at 35000 ft).

As used anywhere herein, "cruise" or "cruise conditions" may mean the aerodynamic design point. Such an aerodynamic design point (or ADP) may correspond to the conditions (comprising, for example, one or more of the Mach Number, environmental conditions and thrust requirement) for which the fan is designed to operate. This may mean, for example, the conditions at which the fan (or gas turbine engine) is designed to have optimum efficiency.

In use, a gas turbine engine described and/or claimed herein may operate at the cruise conditions defined elsewhere herein. Such cruise conditions may be determined by the cruise conditions (for example the mid-cruise conditions) of an aircraft to which at least one (for example 2 or 4) gas turbine engine may be mounted in order to provide propulsive thrust.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

Embodiments will now be described by way of example only, with reference to the Figures, in which:
Figure 1 is a sectional side view of a gas turbine engine;
Figure 2 is a close up sectional side view of an upstream portion of a gas turbine engine;
Figure 3 is a partially cut-away view of a gearbox for a gas turbine engine;
Figure 4 shows an example turbomachine blade;
Figure 5 is a view along the circumference of the shroud of a turbomachine blade according to Figure 4;
Figure 6 is a cross-sectional view of the abutment between a turbomachine blade and an adjacent turbomachine blade according to Figures 4-5;
Figure 7 is a flowchart showing the method of manufacturing the turbomachine blade of Figures 4-6;
Figure 8 is a view along the circumference of the shroud of a second example turbomachine blade;
Figure 9 is a cross-sectional view of the abutment between a turbomachine blade and an adjacent turbomachine blade according to Figure 8; and
Figure 10 is a flowchart showing the method of manufacturing the turbomachine blade of Figures 8-9.

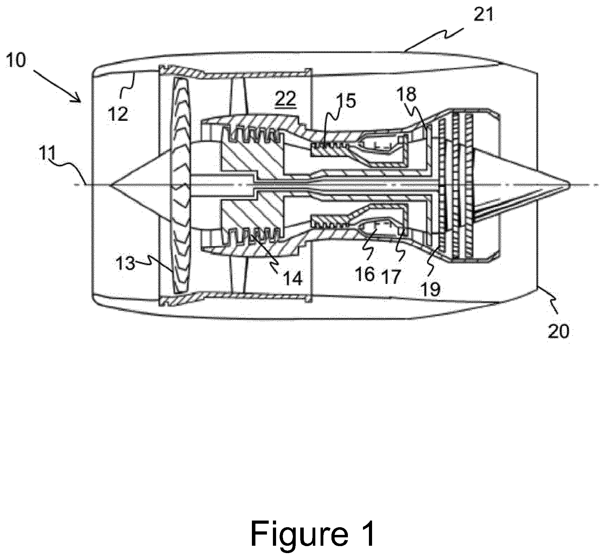

Figure 1 illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

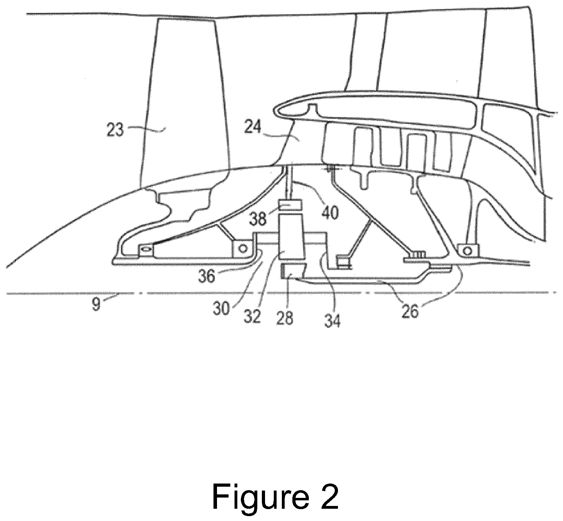

An exemplary arrangement for a geared fan gas turbine engine 10 is shown in Figure 2. The low pressure turbine 19 (see Figure 1) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

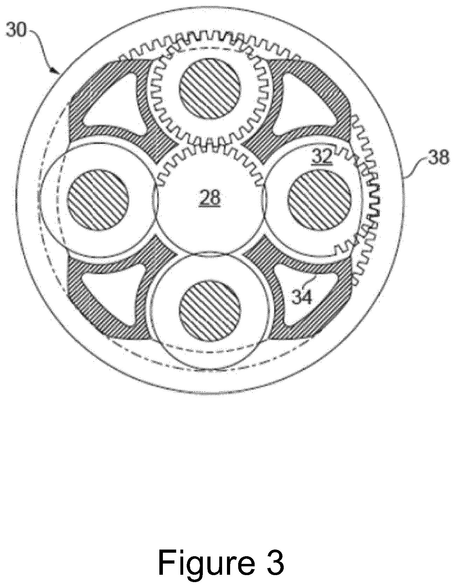

The epicyclic gearbox 30 is shown by way of example in greater detail in Figure 3. Each of the sun gear 28, planet gears 32 and ring gear 38 comprise teeth about their periphery to intermesh with the other gears. However, for clarity only exemplary portions of the teeth are illustrated in Figure 3. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32.

The epicyclic gearbox 30 illustrated by way of example in Figures 2 and 3 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 2 and 3 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the Figure 2 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 2. For example, where the gearbox 30 has a star arrangement (described above), the skilled person would readily understand that the arrangement of output and support linkages and bearing locations would typically be different to that shown by way of example in Figure 2.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 18, 20 meaning that the flow through the bypass duct 22 has its own nozzle 18 that is separate to and radially outside the core engine nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

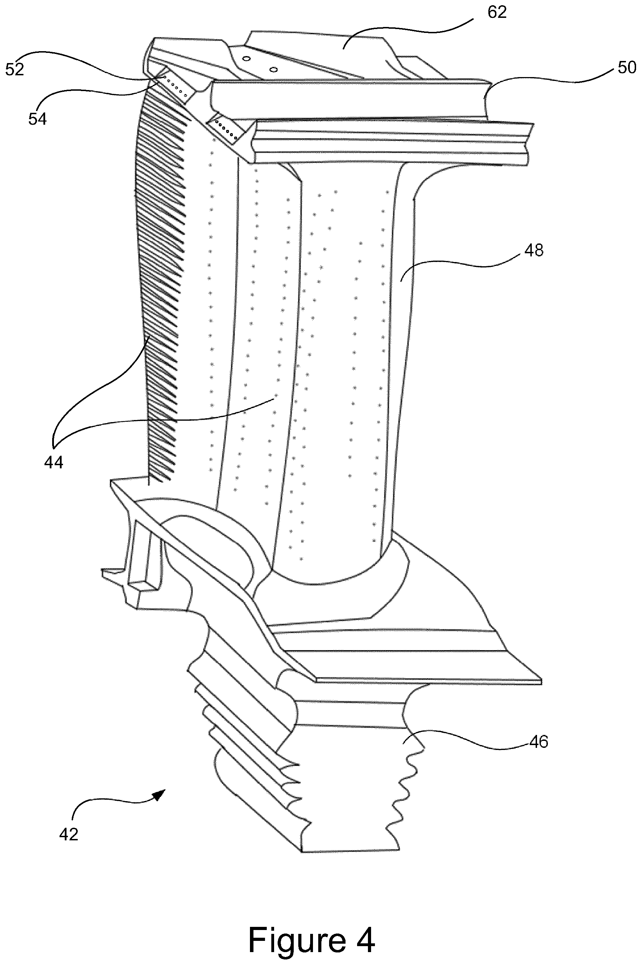

Figure 4 shows an example turbomachine blade 42. The blade 42 is a shrouded turbine blade of conventional design except for features relating to the cooling of the shroud. The blade 42 comprises a root 46, an aerofoil 48 and a shroud 50 at the blade tip. The root 46 comprises a fir-tree fixing for attaching the blade to a turbine disc of a gas turbine engine. Since the turbomachine blade 42 is configured to be installed in a turbine disc for rotation around the principal rotational axis 9 of the engine, it has an axial extent corresponding to the rotational axis 9 of the engine, a radial extent which is generally spanwise from the root to the shroud, and a circumferential extent (i.e. around the rotational axis 9).

The shroud 50 forms a circumferential segment at the tip of the blade 42, such that, in operation, shrouds of adjacent blades are arranged to meet circumferentially to form an annular shroud of the turbine. The purpose of the annular shroud is to minimise leakage of hot working gases from within the blade row. The shroud also provides a protective barrier to protect components outside the blade row from the high temperatures of the hot working gases.

The blade 42 comprises a network of internal cooling passageways. A source of cooling air may be delivered from an inlet in the root of the blade 42. Cooling air flows through the network of cooling passageways and exits through cooling passageway openings 44, 52, which are provided on the aerofoil and the shroud. In this example, at least some of the cooling passageways have openings 52 formed on a radially outer platform surface of the blade, and in particular a chamfer towards a side surface of the shroud 50, as will be described in detail below.

The cooling passageways may be machined using Electrical Discharge Machining (EDM). EDM is a highly accurate machining technique which can be useful in applications where conventional machining may be difficult or imprecise. The cooling passageways have a very small cross-section (e.g. approximately XXmm²) and are generally manufactured according to minimal tolerances. The blade may be manufactured from a hard metallic alloy (such as a super nickel alloy) and EDM provides a method of precisely machining the internal cooling passageways in the blade.

In EDM, an electrical current passes between an electrode and a workpiece, which are separated by a dielectric liquid. When the voltage between the workpiece and the electrode is increased, the electric field strength of the volume between the workpiece and the electrode becomes greater than the strength of the dielectric liquid. The dielectric liquid then breaks down and current flows between the electrode and the workpiece in the form of a spark. The spark removes material from the workpiece.

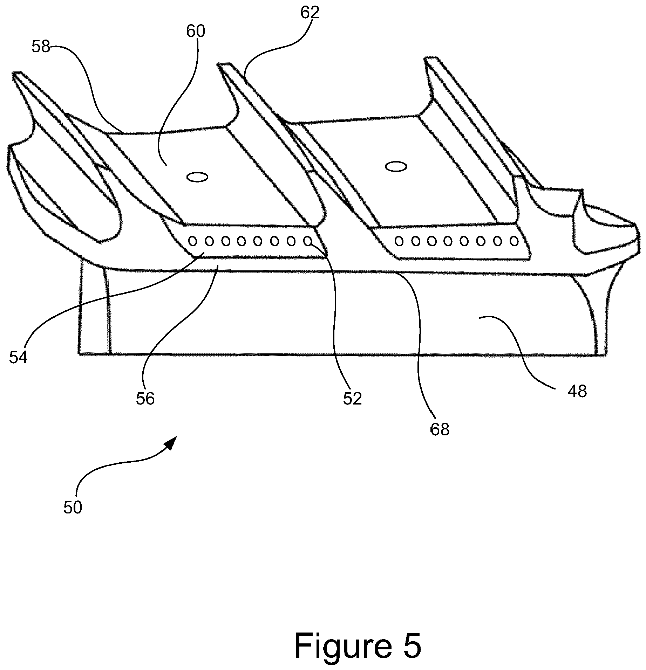

Figure 5 shows a view along a circumferential direction of the shroud 50 of the blade described above with respect to Figure 4. The shroud 50 extends circumferentially between a first abutment surface 56 and a second abutment surface 58. In this example, both the first abutment surface 56 and the second abutment surface 58 are axially extending (i.e. they have an extent along the rotational axis 9 of the engine) and are also circumferentially extending, when assembled in a gas turbine engine. In variants of this example, the first abutment surface 56 and the second abutment surface may be elongate along the axial direction only (i.e. having no circumferential extent). The shroud 50 has a radially-outer platform surface 60, which extends circumferentially between the first abutment surface 56 and the second abutment surface 58. The shroud comprises at least one fin 62, extending radially outward from the platform surface 60 and extending along a generally circumferential direction between the first and second abutment surfaces 56, 58. In use, the fins 62 act to minimise leakage of hot working gases between the platform surface 60 and a liner of a turbine casing. The fins 62 separate multiple axially-adjacent sections of the outer platform surface 60 along the shroud 50. The shroud 50 comprises a radially inner surface 68, which is arranged at a radially inner portion of the shroud 50 and delimits a main flow path for a working gas through the turbine.

The platform surface 60 comprises a chamfer 54 adjacent to the first abutment surface 56. The chamfer 54 axially extends along the junction of the platform surface 60 and the first abutment surface 56 and in this example is delimited at opposing axial ends by the fins 62. Each axially-adjacent section of the outer platform surface 60 may comprise a chamfer 54, each chamfer 54 being located adjacent to the first abutment surface 56 as described above. There is a chamfer edge between the chamfer 54 and the first abutment surface 56. The chamfer 54 may be arranged to describe an angle of between 30 to 80 degrees with respect to the first abutment surface 56, in a plane normal to the chamfer edge.

As discussed previously, the blade 42 comprises a network of internal cooling passageways. The cooling passageways are configured to carry cooling air from an inlet, which may be located at the root of the blade, to the shroud 50. In this example, a plurality of cooling passageways terminates at the chamfer 54 of the shroud 50, at respective cooling passageway openings 52. In use, the cooling air exits from each cooling passageway through the cooling passageway opening 52, in order to both cool the shroud as it passes through the shroud, and to discharge cooling air over surfaces of the shroud 50. In this example there is a plurality of cooling passageway openings 52 on the chamfer 54, which are spaced apart in an axial direction along the chamfer 54. In variants of the example, there may be a single cooling passageway opening at the chamfer 54.

Since the cooling passageway openings 52 are arranged on the chamfer 54, they are circumferentially offset from the first abutment surface 56, so as to be circumferentially offset from a second abutment surface 56 of a like adjacent blade in use. The circumferential offset may be at least a radius of the cooling passageway. Each cooling passageway opening 52 is also arranged at a radial offset from the chamfer edge, for example at least a radius of the cooling passageway. The radial extent of the first abutment surface 56 between the radially-inner surface of the shroud and the chamfer edge may be at least a radius of the cooling passageway.

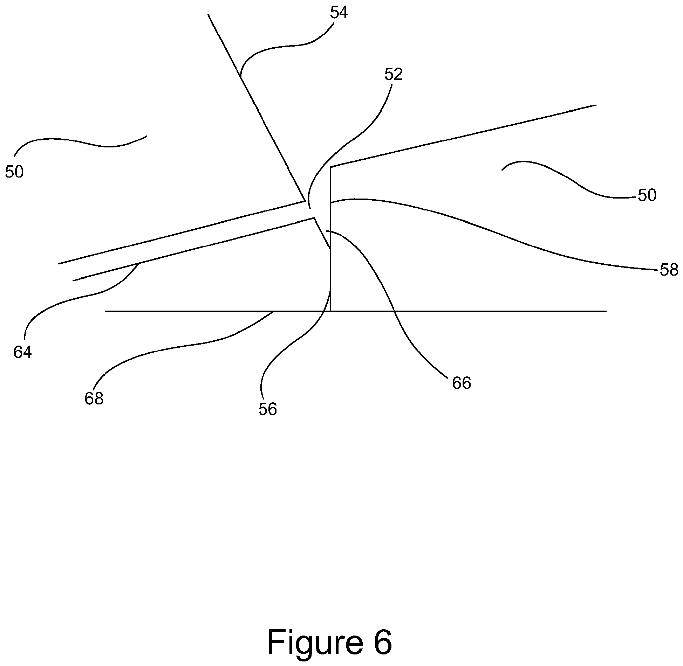

Figure 6 shows an example region at which the shroud 50 of a first blade meets a shroud 50 of an adjacent, like, second blade (as viewed in a plane normal to the chamfer edge). When the blades are assembled in a turbine, the first abutment surface 56 of the first blade abuts against the second abutment surface 58 of the second blade.

As shown in Figure 6, the chamfer 54 is angled with respect to the first abutment surface 56 (which is coincident with a radial plane) such that there is a variable circumferential offset from the first abutment surface 56 along the chamfer. When the first abutment surface 56 of the first blade 42 abuts the second abutment surface 58 of the second blade, the second abutment surface 58 extends radially outward beyond the first abutment surface 56. A trough 66 is therefore defined between the chamfer 54 of the first blade and the second abutment surface 58 of the adjacent blade. The lowest point of the trough 66 corresponds to a radially-innermost point of the chamfer 54 where it intersects the first abutment surface 56 and abuts the second abutment surface 58. The trough 66 extends along the length of the chamfer 54.

In use, cooling air flows along the cooling passageway 64 to the cooling passageway opening 52, located on the chamfer 54. Cooling air is therefore delivered to the trough 66. This allows cooling air to flow close to areas of the shroud that may otherwise be susceptible to hotspots, and in particular close to the first abutment surface 56 for conductive cooling through the thickness of the shroud.

The inventors have found that it is particularly advantageous to have a small circumferential offset between the openings of the cooling passageways and the intersection between the abutment surfaces of adjacent blades, as this limits the space into which the cooling air is delivered so that its cooling effect can be concentrated at the shroud. By using a chamfer to form a circumferential offset (as opposed to milling a recess, for example), the inventors have found that they have improved control over the extent of the circumferential offset. In particular, whilst a milled recess will generally be of a constant circumferential offset (with relatively wide tolerances), a chamfer naturally has a variable circumferential offset. This means that by suitable selection of a radial position along the chamfer for the opening, a desired circumferential offset can be selected. The chamfer may be machined using any suitable tool.

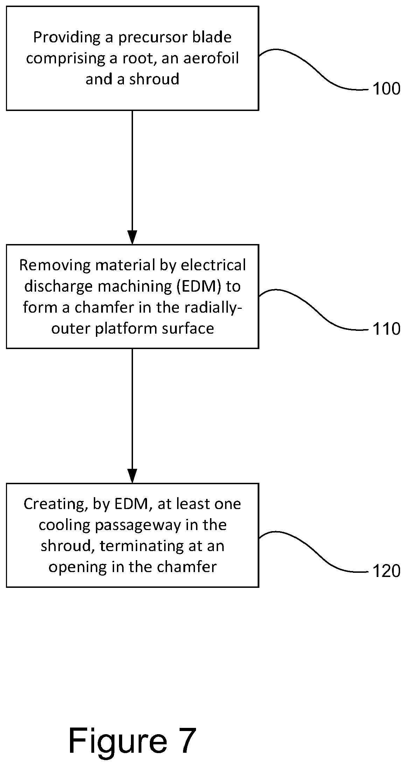

The chamfer 54 and cooling passageways 64 can be machined using an EDM process. An example manufacturing process will now be described below with respect to Figure 7 and with reference to the blade 42 described above with respect to Figures 4-6. In block 100, a precursor blade is provided, comprising a root, an aerofoil and a shroud. The shroud of the precursor blade has substantially the same features as the blade discussed previously, with the exception that there is no chamfer and cooling passageways. The shroud extends circumferentially between first and second side surfaces.

The precursor blade may be mounted in an EDM machine, in a dielectric fluid. The EDM machine comprises an EDM electrode, which may be referred to as the tool electrode, which is used to erode and remove material in the precursor blade. In block 110, the tool electrode is used to remove material from a radially outer portion of the first side surface to create the chamfer 54. The remaining portion of the first side surface forms the first abutment surface 56. In block 120, the tool electrode is used to create at least one cooling passageway 64 in the shroud, terminating at the chamfer to provide a cooling passageway opening 52. The tool electrode may also be used create multiple cooling passageways in the shroud, each cooling passageway 64 terminating at the chamfer 54 to provide a respective cooling passageway opening 52. Both the chamfer 54 and cooling passageways may be machined using the same tool electrode, therefore removing the need to reposition the blade in the EDM machine between processes, or re-align a new tool with respect to the blade. In variants of this example, the cooling passageways may be formed before the chamfer.

Using an EDM process allows the chamfer 54 to be machined accurately in the shroud 50, with improved manufacturing tolerances as compared with traditional machining techniques such as milling. As a result, the cooling passageway openings 52 can be created with accurate control over the location of the circumferential and radial offset as described above.

In another example, the chamfer 54 may be machined using a grinding wheel. The grinding wheel may be used to first create the chamfer 54 on the shroud of the precursor blade. An EDM process as outlined above may subsequently be used to create at least one cooling passageway 64 in the shroud and cooling passageway opening 52 in the chamfer 54.

In other examples, the chamfer 54 may be machined using a milling process or a laser machining process.

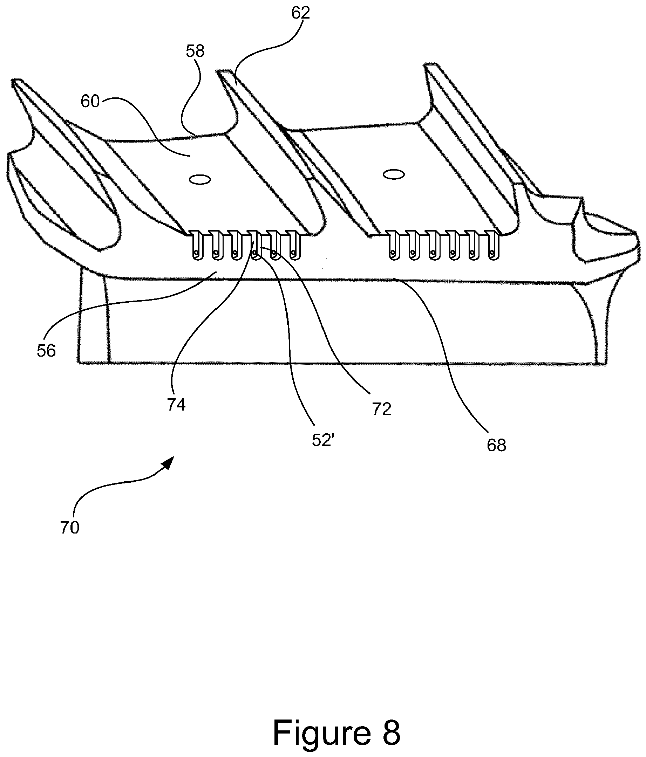

Figure 8 shows a view along a circumferential direction of a shroud 70 of a second example blade. The blade and the shroud 70 comprise similar features to that of the first example as previously described, with like reference numerals indicating like features. It differs in that it comprises a plurality of channels rather than a recess. The shroud 70 comprises a first abutment surface 56 and a second abutment surface 58. The shroud 70 comprises an outer platform surface 60, an inner platform surface 68, and at least one fin 62.

The shroud 70 comprises a plurality of channels 72 recessed in the first abutment surface 56. The channels are substantially similar to one another and only one will be described in detail in the foregoing description. The channel 72 extends radially inwards from an opening at the outer platform surface 60 to an opposing radially-inner end. In this example, the channel 72 comprises a rectangular cross-section, however, in other examples, the cross-section may be rounded or have any suitable shape. The channel 72 comprises an inner channel surface 74, which is circumferentially offset from the first abutment surface 56. The channel is open at the first abutment surface 56.

As described previously, the blade comprises a network of internal cooling passageways. The cooling passageways carry cooling air from an inlet, which may be located at the root of the blade, to the shroud 70. There is a cooling passageway opening 52' into the channel 72. In particular, the cooling passageway opening 52' is arranged on the inner channel surface 74 of the channel 72, such as a portion of the inner channel surface 74 which opposes the open side of the channel at the first abutment surface. In this example, the cooling passageway opening 52' is arranged adjacent to (i.e. proximal to, towards) the radially-inner end of the channel 72.

The inner channel surface 74 and hence, the cooling passageway opening 52', may be circumferentially offset from the first abutment surface 56 by at least a radius of the cooling passageway. The radial depth of the channel 72, from the opening at the outer platform surface to the radially-inner end, may be between 1 to 5 times the diameter of the cooling passageway opening 52'. The cooling passageway opening 52' may be radially offset from the inner platform surface 68 by at least a radius of the cooling passageway.

Each of the channels 72 in this example comprises a respective cooling passageway opening 52' into the channel 72, each cooling passageway opening 52' arranged in the channel 72 as described above.

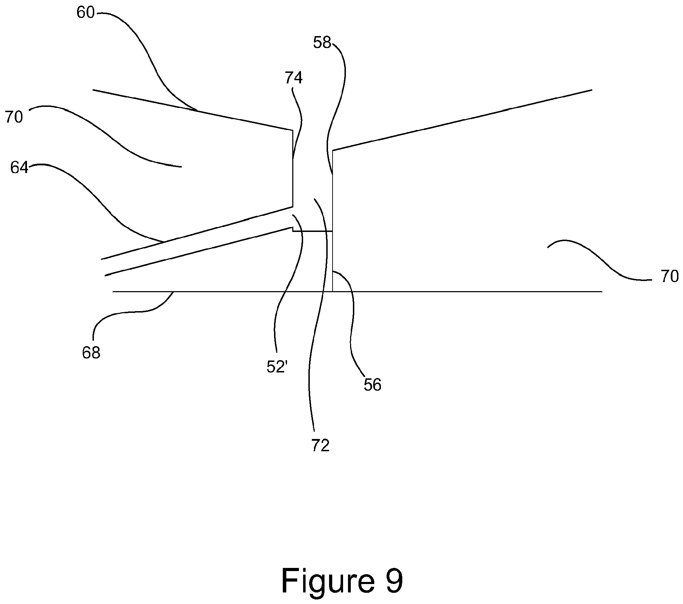

Figure 9 shows a region of abutment between the shroud 70 of a first blade and the shroud 70 of an adjacent, like, second blade. When the blades are assembled in a turbine, the first abutment surface 56 of the first blade contacts or abuts against the second abutment surface 58 of the second blade.

When the first abutment surface 56 of the first blade abuts the second abutment surface 58 of the second blade, the second abutment surface 58 has a radial extent further than that of the first abutment surface. Therefore, the open side of the channel 72 at the first abutment surface is at least partially closed by the second abutment surface of the like adjacent blade.

In use, cooling air flows along the cooling passageway 64 to the cooling passageway opening 52', which is located in the inner channel surface 74, adjacent to a radially inner end of the channel 72. Cooling air subsequently flows into the channel 72, in the region adjacent to the first abutment surface 56, and then flows radially out of the channel 72.

The cross-sectional area of the cooling passageway opening 52' may be no more than the cross-sectional area of the opening of the channel 72, in order to prevent choking of the cooling flow in the channel, which would otherwise provide a resistance to flow compared with other channels in the cooling network, and thereby have the effect of reducing a flow rate through the choked channel. It is therefore desirable to avoid choking to allow cooling air to flow effectively and cool areas of high temperature in the shroud 70.

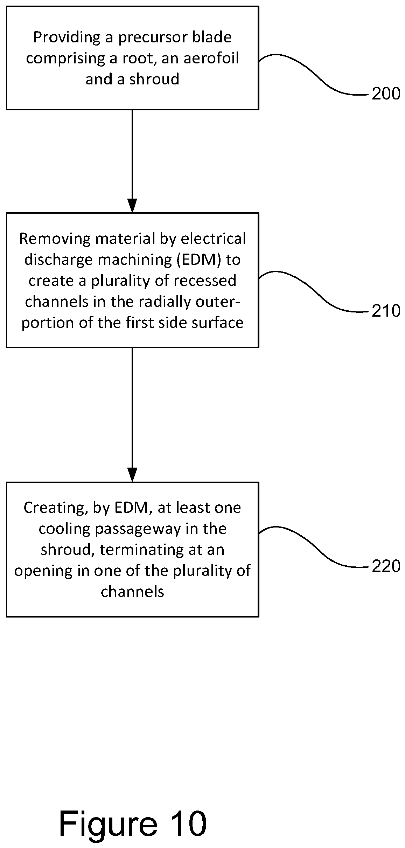

Both the channel 72 and the cooling passageway opening 52' can be machined using EDM. An example manufacturing process will now be described below with respect to Figure 10 and with reference to the blade 42 described above with respect to Figures 8-9. Similar to the process previously described, in block 200 a precursor blade is first provided, comprising a root 46, an aerofoil 48 and a shroud 70. The shroud 70 of the precursor blade has substantially the same features as the blade 42 discussed previously, with the exception of the channel 72 and cooling passageways 52.

The precursor blade may be mounted in an EDM machine, in a dielectric fluid. In block 210, the tool electrode of the EDM machine is used to remove material from a radially outer portion of the first side surface to create the channel 72. The remaining portion of the first side surface forms the first abutment surface 56. In block 220, the tool electrode is used to create at least one cooling passageway 64 in the shroud 70. A cooling passageway opening 52' is created in the inner channel surface 74 adjacent to the radially-inner end of the channel 72, with the tool electrode. A plurality of said channels 72 can be machined using the tool electrode. A single tool electrode may also be used to machine a plurality of said channels 72 simultaneously, in a single process.

The tool electrode may also be used create multiple cooling passageways 64 in the shroud 70, each cooling passageway opening into a respective one of the channels 72. In an example, the channel 72 and cooling passageway may be machined using the same tool electrode, therefore removing the need to reposition the blade in the EDM machine between processes. In variants of this example, the cooling passageways may be formed before the channels 72.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

## Claims

1. A turbomachine blade comprising a root, an aerofoil, and a shroud, wherein:
the shroud extends circumferentially between an axially extending first abutment surface and an opposing axially extending second abutment surface, the first abutment surface being configured to abut a second abutment surface of an adjacent blade;
the shroud comprises a radially-outer platform surface circumferentially extending between the first and second abutment surfaces;
the shroud comprises a plurality of channels recessed in the first abutment surface, each channel extending radially from a respective opening at the platform surface to a respective opposing radially-inner end; and
the shroud comprises a plurality of cooling passageways, each cooling passageway opening into a respective one of the plurality of channels so that in use a cooling flow from each cooling passageway flows along the respective channel to the respective opening in the platform surface.

2. The turbomachine blade according to Claim 1, wherein each cooling passageway opening is circumferentially offset from the first abutment surface by at least a radius of the cooling passageway.

3. The turbomachine blade according to Claim 1 or Claim 2, wherein each cooling passageway is configured to deliver cooling flow adjacent to the first abutment surface.

4. The turbomachine blade according to any one of the preceding claims, wherein a cross-sectional area of the opening of each passageway into the respective channel is no more than a cross-sectional area of the respective opening of the channel at the platform surface.

5. The turbomachine blade according to any one of the preceding claims, wherein each channel is open on the first abutment surface, and wherein the second abutment surface has a radial extent such that, when the turbomachine blade abuts a like adjacent turbomachine blade, the second abutment surface of the adjacent blade at least partially closes each channel.

6. A turbomachine blade comprising a root, an aerofoil, and a shroud, wherein:
the shroud extends circumferentially between an axially extending first abutment surface and an opposing axially extending second abutment surface, the first abutment surface being configured to abut a second abutment surface of an adjacent blade;
the shroud comprises a radially-outer platform surface circumferentially extending between the first and second abutment surfaces;
the platform surface comprises a chamfer adjacent to the first abutment surface; and
the shroud comprises a cooling passageway terminating at the chamfer.

7. The turbomachine blade according to Claim 6, wherein the second abutment surface extends radially beyond the first abutment surface such that the turbomachine blade is configured to define a trough between the chamfer and the second abutment surface of the adjacent blade.

8. The turbomachine blade according to Claim 6 or Claim 7, wherein there is a chamfer edge defined between the chamfer and the first abutment surface, and further wherein the chamfer is arranged at an angle of 30 to 80 degrees with respect to the first abutment surface, in a plane normal to the chamfer edge.

9. The turbomachine blade according to any one of Claims 6 to 8, wherein a plurality of cooling passageways terminate at the chamfer.

10. A method of manufacturing a turbomachine blade, comprising:
providing a precursor blade comprising a root, an aerofoil and a shroud, the shroud extending circumferentially between first and second side surfaces;
removing material by electrical discharge machining (EDM) from a radially-outer portion of the first side surface to form a radially-outer offset surface which is circumferentially offset from a remaining portion of the first side surface;
creating, by EDM, at least one cooling passageway in the shroud, which terminates at an opening in the offset surface.

11. The method according to Claim 10, wherein the shroud comprises a radially-outer platform surface circumferentially extending between the first side surface and second side surface, the platform surface including the offset surface.

12. The method according to Claim 10 or Claim 11, wherein the material is removed to form a chamfer in the radially-outer platform surface, the chamfer defining the radially-outer offset surface and being adjacent to the remaining portion of the first side surface.

13. The method according to Claim 10 or Claim 11, wherein the material is removed to create a plurality of recessed channels in the radially-outer portion of the first side surface, each channel extending radially from a respective opening at the platform surface to a respective opposing radially-inner end, wherein each channel has a respective radially-outer offset surface.

14. The method according to any one of Claims 10 to 13, wherein removing material by EDM and creating the at least one cooling passageway is performed using the same EDM electrode.

15. A method of manufacturing a plurality of turbomachine blades, each blade manufactured by a method in accordance with any one of Claims 10 to 14, wherein the blades are configured so that in each pair of adjacent blades, the remaining portion of the first side surface of one blade of the pair abuts the second side surface of the second blade of the pair.
